# EUROPEAN PATENT APPLICATION

(11) **EP 1 921 818 A2**
(43) Date of publication of application: **14.05.2008**
(21) Application number: 07017581.5
(22) Date of filing: 07.09.2007
(51) Int. Cl.: H04L 29/06

(54) **Mobility management system and method for mobile internet protocol network**

(30) Priority: 09.11.2006 KR 20060110685
(71) Applicant: Samsung Electronics Co., Ltd., Suwon-si, Gyeonggi-Do (KR)
(72) Inventor: Beak, Seung Jin, Suwon-si Gyeonggi-do (KR)
(74) Representative: Lang, Johannes

(57) **Abstract**

A system and a method for managing mobility of a mobile node for a Mobile IP network using a routing technique that is a hybrid of an internet protocol routing scheme and a home based routing scheme are provided. A mobility management method for a network including a router defining a local network having a subnet defined by a radio access node includes assigning an address to a mobile node entering the subnet, registering the address of the mobile node to a home agent connected to the router through a foreign agent as a gateway of the local network, consulting routing tables of the radio access node and the router to deliver data to the mobile node, and updating the routing tables without changing the address of the mobile node when the mobile node moves to another subnet in the local network.

## Description

### BACKGROUND OF THE INVENTION

### Field of the invention

The present invention relates to a mobile Internet Protocol (IP) network and, in particular, to a system and a method for managing mobility of a mobile node using a routing technique that is a hybrid of an internet protocol routing scheme and a home-based routing scheme.

### Discussion of the background

With the advances of processing technologies and radio access technologies, there has been a tremendous increase in mobility requirements.

However, the current internet protocol (IPv4) has been designed for routing packets in consideration of fixed nodes rather than mobile nodes. Thus, it is not useful for mobile users. In IPv4-based Internet, when the mobile host leaves one network area and enters another, it must be assigned an available IP address from the new network to maintain a connection to the Internet. In order to solve this problem, Mobile IP has been developed by the Mobile IP working group of the Internet Engineering Task Force (IETF).

The Internet was developed in part to provide universal connectivity of all kind of networks and thus, the Mobile IP-based techniques have been developed to secure backward compatibility with the existing transport layer protocols, applications, and infrastructure.

In Mobile IP, a mobile node is assigned an IP address for each service provider. However, Mobile IP assignment schemes have been designed based on the conventional IP assignment policy and it is therefore difficult to adopt the Mobile IP assignment schemes to real networking. Although Mobile IP protocols are deployed on the current IPv4 Internet, Mobile IP is still limited in regard to IP address management.

### SUMMARY OF THE INVENTION

The present invention provides a mobility management system and a method for Mobile IP that may be capable of efficiently managing IP addresses using a hybrid IP assignment scheme.

Additional features of the invention will be set forth in the description which follows, and in part will be apparent from the description, or may be learned by practice of the invention.

The present invention discloses a mobility management method for a network including a router defining a local network having a subnet defined by a radio access node. The mobility management method includes assigning an address to a mobile node in the subnet, registering the address of the mobile node with a home agent connected to the router through a foreign agent as a gateway of the local network, consulting routing tables of the radio access node and the router to deliver data to the mobile node, and updating the routing tables when the mobile node moves to another subnet in the local network without changing the address of the mobile node.

The present invention also discloses a mobility management method for a network including a router defining a local network having a subnet defined by a radio access node. The mobility management method includes registering a mobile node with a home agent when the mobile node enters the local network, consulting routing tables of the router and the radio access node to route a datagram addressed to the mobile node, detecting a movement of the mobile node, determining whether the movement of the mobile node is an intra-local network movement or an inter-local network movement, updating the routing tables without changing the address of the mobile node if the movement of the mobile node is an intra-local network movement, and changing the address of the mobile node if the movement of the mobile node is an inter-local network movement.

The present invention also discloses a mobility management system including a home agent to manage a fixed address and care-of address of a mobile node, a foreign agent connected to the home agent, the foreign agent being a gateway of a local network, a router connected to the foreign agent in the local network, and a radio access node connected to the router, wherein the care-of address does not change when the mobile performs a handover between radio access nodes in the local network.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
- FIG. 1: is a schematic diagram showing a mobility management system according to an exemplary embodiment of the present invention.
- FIG. 2: is block diagram showing a configuration of a communication network of FIG. 1.
- FIG. 3: is a diagram showing a configuration of the local network of FIG. 2.
- FIG. 4: shows examples of routing tables adopted to the local network of FIG. 3.
- FIG. 5: is a diagram showing a mobility management system in the local network of FIG. 3.
- FIG. 6: shows examples of routing tables to explain an update of the routing tables of FIG. 4.
- FIG. 7: is a flowchart showing a routing procedure of a mobility management method for Mobile IP network according to an exemplary embodiment of the present invention.
- FIG. 8: is a message flow diagram showing message flows in the routing procedure of FIG. 7.
- FIG. 9: is a flowchart showing a route reconfiguration procedure of a mobility management method for Mobile IP network according to an exemplary embodiment of the present invention.
- FIG. 10: is a message flow diagram showing message flows in the route reconfiguration procedure of FIG. 9.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

In the present invention, the mobile node may include a Personal Digital Assistant (PDA), a laptop computer, a Smartphone, a 3^{rd} generation standard mobile terminal, a Code Division Multiple Access (CDMA) terminal, a Global System for mobile communication (GSM) terminal, a Global Packet Radio Services (GPRS) terminal, a Wireless Local Area Network (WLAN) terminal, a Wireless Broadband (WiBro) Terminal, or a High Speed Downlink Packet Access (HSDPA) terminal.

In the following exemplary embodiment, a local network is defined as a network administered by a packet data serving node, and the packet data serving node is a gateway router to interface with another network. However, the present invention is not limited to the local network defined by a packet data serving node. For example, the mobility management system and method may be adapted to a fully deployed Internet comprising a plurality of local networks. That is, the mobility management system and method of the present invention may be implemented with a network including a plurality of gateway routers.

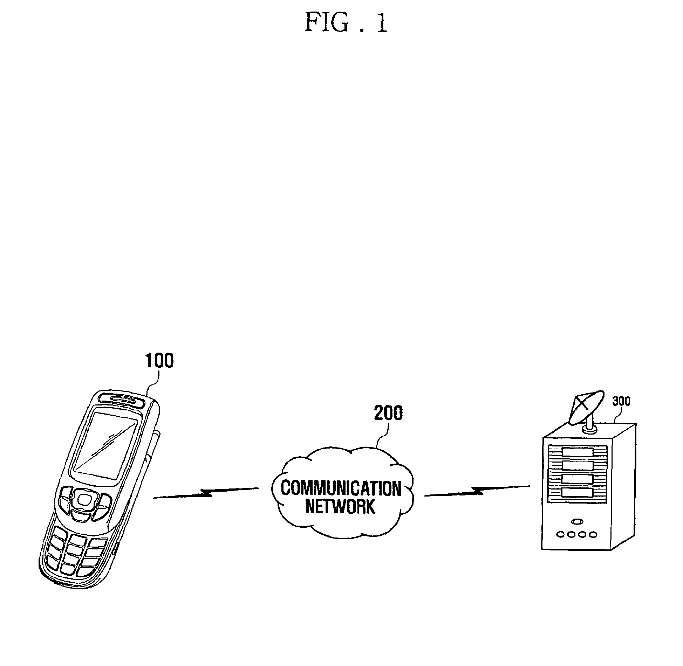

FIG. 1 is a schematic diagram showing a mobility management system according to an exemplary embodiment of the present invention.

Referring to FIG. 1, the mobility management system includes a mobile node 100, a correspondent node 300, and a communication network 200. The correspondent node 300 may be a server for providing the mobile node 100 with a specific service or a counterpart mobile node to communicate with the mobile node 100.

It is assumed that the mobile node 100 receives datagrams from the correspondent node 300 through the communication network 200. In order to communicate with the correspondent node 300, the mobile node 100 is assigned an IP address by the communication network 200 and thus, is registered in the communication network 200 with the assigned IP address.

In the case of a data transmission from the correspondent node 300 to the mobile node 100, the correspondent node 300 transmits a datagram to the communication network 200, and the communication network 200 forwards the datagram to the mobile node 100 with reference to the IP address contained in a header of the datagram.

Upon receiving a datagram, the communication network checks the IP address indicated in a destination field of the header of the datagram so as to recognize the current location of the mobile node 100 and then, transmits the datagram to the mobile node 100. In order to maintain communication, the communication network 200 maintains the IP address of the mobile node 100 when the mobile node 100 is in the original sub-network and registers the mobile node 100 with a new IP address when it roams around the sub-network, to guarantee the mobility of the mobile node 100.

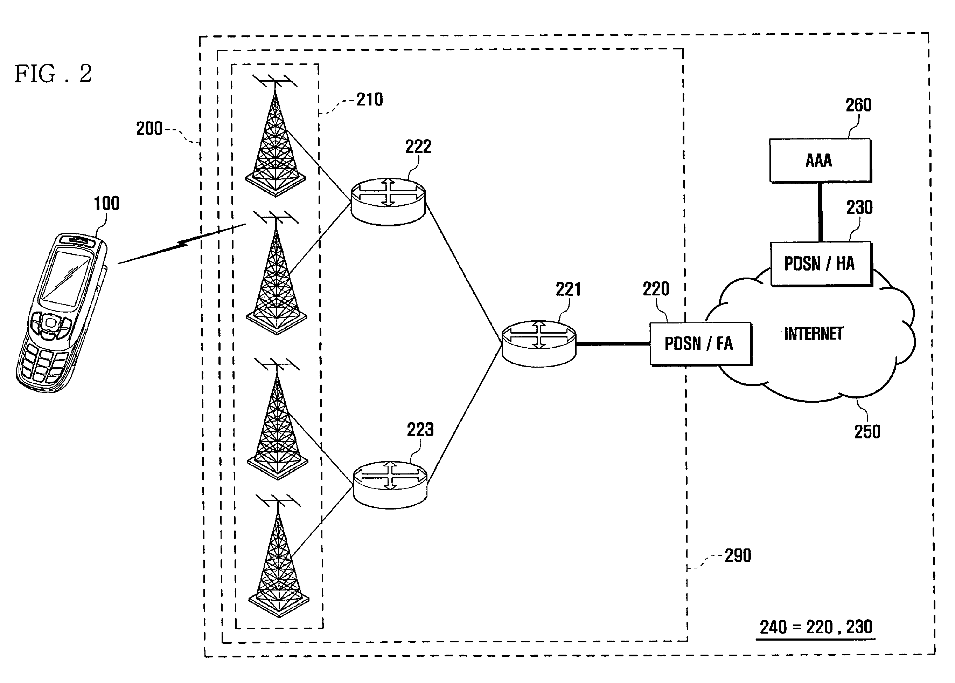

FIG. 2 is block diagram showing a configuration of a communication network of FIG. 1.

Referring to FIG. 2, the communication network 200 includes a Radio Access Network (RAN) 210, a local network 290 including first, second, and third routers 221, 222, and 223, a packet data service node 240 including a packet data serving node foreign agent (PDSN/FA) 220 and a PDSN home agent (PDSN/HA) 230, an Internet 250, and an Authentication Authorization Accounting (AAA) server 260. The number of the routers may be modified as the network environment changes.

If a data call from the mobile node 100 is authenticated, the RAN 210 establishes a virtual channel between the mobile node 100 and the PDSN/FA 220 using a Generic Routing Encapsulation (GRE) protocol. The RAN 210 relays data between the mobile node 100 and the PDSN/FA 220 and assigns an IP address to the mobile node 100. That is, the RAN 210 provides a connection to a core network and assigns the IP address to the mobile node 100.

The routers 221, 222, and 223 are connected to a plurality of RANs. The routers 221, 222, and 223 manage the IP address architectures of the RANs and register, update, and discard IP addresses of mobile nodes in routing tables. That is, each router updates and stores the routing table and transmits the datagram to the destination address with reference to the routing table.

The packet data serving node 240 is responsible for the establishment, maintenance, and termination of a Point-to-Point protocol (PPP) session with the mobile node 100 and provides information on a network access ID authentication, subscriber authentication, and billing through a Remote Authentication Dial In User Service (RADIUS). The packet data serving node 240 performs PPP D-Framing and Byte De-stuffing to convert the PPP packet data into an IP packet. The packet data serving node 240 may be classified as the PDSN/FA 220 or PDSN/HA 230 according to the type of connection with the mobile node 100. In this exemplary embodiment, the packet dater serving node 240 and the mobile node 100 are connected through a PPP channel. However, the present invention is not limited to such a case. For example, a transport control protocol/internet protocol (TCP/IP) may be used instead of the PPP.

The PDSN/FA 220 assigns a care-of address (COA) to the mobile node 100 when the mobile node 100 has arrived in the local network 290. The PDSN/FA 220 provides the mobile node 100 with its routing service when the mobile node is in its network, and forwards the data received from the PDSN/HA 230 to the mobile node 100 using a tunnel protocol. In this case, the PDSN/FA 220 provides the mobile node 100 with a basic gateway service.

In this exemplary embodiment, when the mobile node 100 is located at the service area of the PDSN/FA 220, the PDSN/FA 220 controls the routers 221, 222, and 223 of the local network 290 to share the mobility information of the mobile node 100. Accordingly, the PDSN/FA 220 enables the datagram to be transferred to the mobile node 100 through the routers 221, 222, and 223 even when the mobile node 100 is moving. While the mobile node 100 remains in the local network 290, the PDSN/FA 220 does not report the movement of the mobile node 100. In contrast, when the mobile node 100 moves to another local network, the PDSN/FA 220 reports the movement of the mobile node 100 to the PDSN/HA 230 and then deregisters the old IP address and registers a new IP address assigned by the new local network.

The PDSN/HA 230 is responsible for routing data to the current COA of the mobile node 100 currently attached to a foreign local network. This is achieved through a tunneling process in which the COA is used to deliver the data to the mobile node 100.

In this exemplary embodiment, the PDSN/HA 230 knows only the address of the PDSN/FA 220 of the foreign local network to which the mobile node 100 is currently attached so the PDSN/HA 230 transfers the datagram addressed to the mobile node 100 to the PDSN/FA 220. The data gram is then routed to the mobile node 100 via the routers 221, 222, and 223 that share the information of the IP address of the mobile node 100. The PDSN/FA 220 and PDSN/HA 230 are connected through the Internet 250.

The AAA server 260 is capable of authenticating users, handling authorization requests, and connecting accounting data. The AAA server 260 may be implemented with a Remote Access Dial-In User Service (RADIUS) protocol to collect accounting information collection, a mobile IP registration and authentication, and a dial-in service user authentication/authorization.

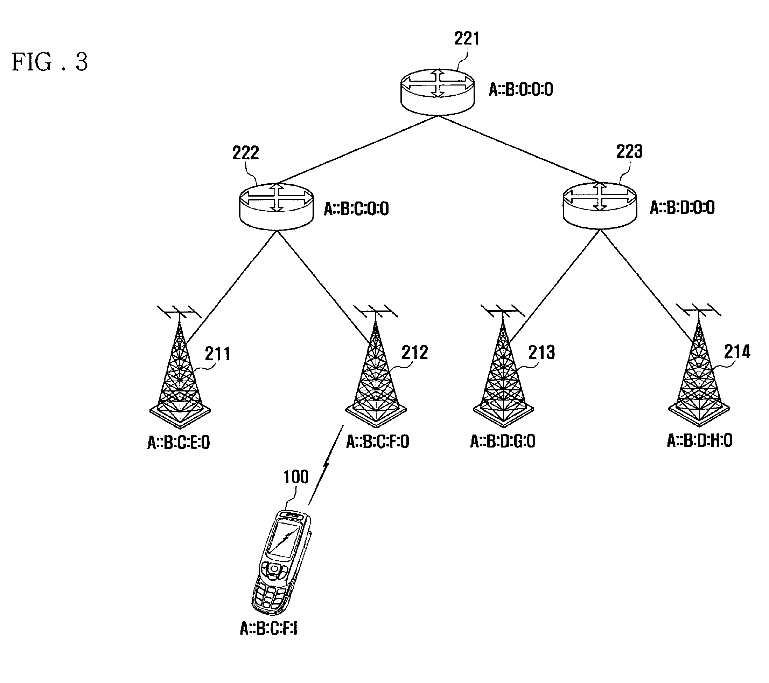

IP address assignment and routing table processes in the above-structured communication network are described hereinafter with reference to FIG. 3, FIG. 4, FIG. 5, and FIG. 6.

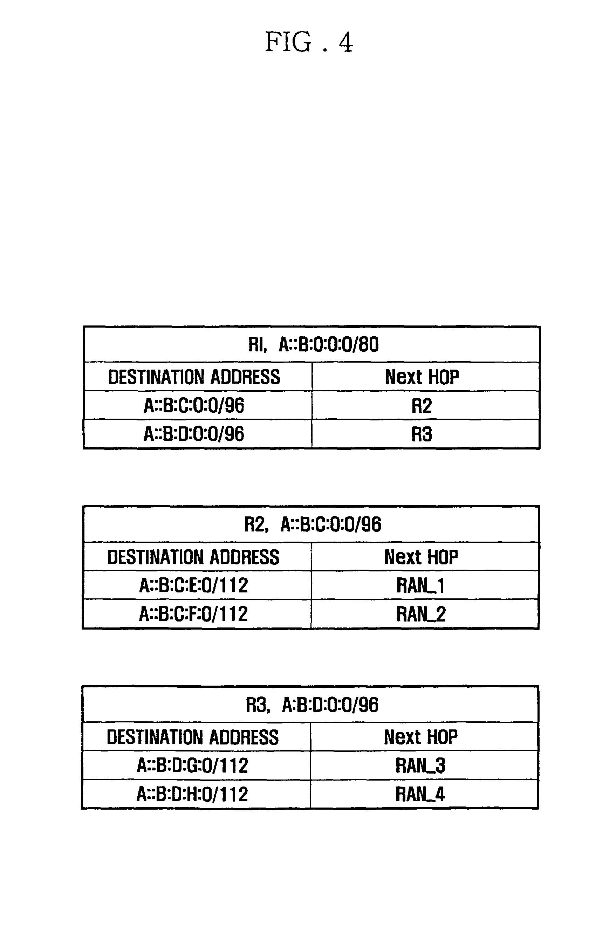

FIG. 3 is a diagram showing a configuration of the local network of FIG. 2, and FIG. 4 shows examples of routing tables adapted to the local network of FIG. 3.

In this exemplary embodiment, the IP address is represented by character strings in which alphanumeric values correspond to specific decimal values.

Referring to FIG. 3, a first router 221 is a branch router to connect second and third routers 222 and 223 of the local network to an external network. The second router 222 is connected to first and second radio access nodes 211 and 212, and the third router 223 is connected to third and fourth radio access nodes 213 and 214. The mobile node 100 is associated with the second radio access node 212.

In FIG. 3, the first, second, and third routers 221, 222, and 223 are assigned IP addresses A::B:0:0:0/80, A::B:C:0:0/96, and A::B:D:0:0/96, respectively. The first and second radio access nodes 211 and 212 associated with the second router 222 are assigned IP addresses A::B:C:E:0/112 and A::B:C:F:0/112, respectively; and the third and fourth radio access nodes 213 and 214 are assigned IP addresses A::B:D:G:0 and A::B:D:H:0, respectively. The mobile node 100 is assigned an IP address A::B:C:F:I from the second radio access node 212. Here, a value (in decimal) following a slash after each address is the size in bits of the network prefix.

FIG. 4 shows routing tables of the respective first, second, and third routers 221, 222, and 223. In FIG. 4, the routing table of the first router 221 lists the next hop routers with their network addresses, i.e. the second router 222 having an IP address of A::B:C:0:0/96 and the third router 223 having an IP address of A::B:D:0:0/96. If the first router 221 receives a datagram in which the destination IP address is A::B:C:F:1, it transfers the datagram to the second router 222 in which IP address has the network prefix A::B:C identical to that of the destination address of the datagram with reference to its routing table.

If the datagram is received, the second router 222 refers to its routing table which lists the first and second radio access nodes 211 and 212 with their respective IP addresses of A::B:C:E:0/112 and A::B:C:F:0/112 (see FIG. 4) and transfers the datagram to the second radio access node 212 in which the network prefix A::B:C:F is identical to that of the destination address of the datagram.

Finally, the second radio access node 212 transfers the datagram to the mobile node 100 having the IP address A::B:C:F:1, i.e., the destination IP address of the datagram.

The routing table of the third router 223 also lists the third and fourth radio access nodes 213 and 214 as the next hops with their respective IP addresses A::B:D:G:0/112 and A::B:D:H:0/112.

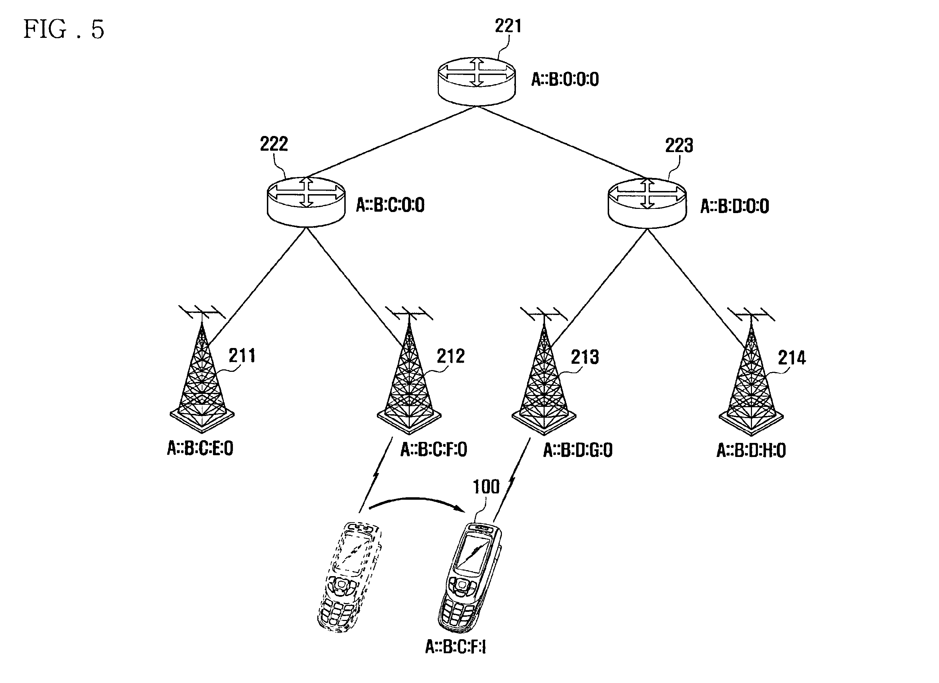

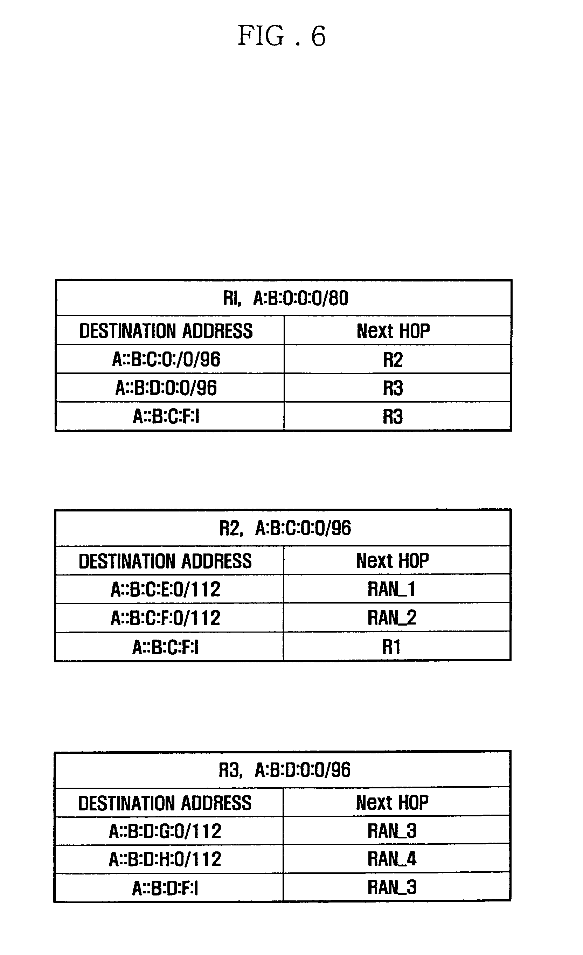

FIG. 5 is a diagram showing a mobility management in the local network of FIG. 3, and FIG. 6 shows examples of routing tables for explaining an update of the routing tables of FIG. 4.

Referring to FIG. 5, a first router 221 is a branch router to connect second and third routers 222 and 223 of the local network to an external network. The second router 222 is connected to first and second radio access nodes 211 and 212, and the third router 223 is connected to third and fourth radio access nodes 213 and 214. The mobile node 100 moves intra-network represented by the move to the third radio access node 213. Although the mobile node 100 is associated with the third radio access node 213, its IP address A::B:C:F:1 is maintained.

Referring to FIG. 6, the routing table of the first router 221 lists the next hop routers with their network addresses, i.e. the second router 222 having an IP address of A::B:C:0:0/96 and the third router 223 having an IP address of A::B:D:0:0/96. Also, the first router 221 stores the destination IP address A::B:C:F:I of the datagram in its routing table and designates the third router 223, which manages the radio access node (third access node 213) to which the mobile node 100 moves, as the next hop router for the destination address. Accordingly, when a datagram having the destination IP address A::B:C:F:I is received, the first router 221 transfers the datagram to the third router 223 rather than the second router 222 even though the network prefix of destination address of the datagram is not identical to that of the third router 223.

The routing table of the second router 222 lists the first and second radio access nodes 211 and 222 with their respective IP addresses of A::B:C:E:0/112 and A::B:C:F:0/112 as its next hops. Also, the second router 222 stores the destination IP address of the datagram in its routing table and designates the first router 221 as the next hop router for the destination address. In this case, the next hop router designated for the destination address is used for rerouting the datagram when the datagram is abnormally routed.

The routing table of the third router 223 lists the third and fourth radio access nodes 213 and 214 as the next hops with their respective IP addresses A::B:D:G:0/112 and A::B:D:H:0/112. Also, the third router 223 stores the destination IP address A:B:C:F:1 of the datagram in its routing table and designates the third radio access node 213 as the next hop for the destination address. Accordingly, when the datagram having the destination IP address A::B:C:F:1, the third router 223 may transfer the datagram to the mobile node 100 through the third radio access node 213 even when the prefix of the destination address is not identical to that of the third radio access node 213.

As described above, the mobility management system according to an exemplary embodiment of the present invention enables the routing of datagrams to a roaming mobile node by updating the routing tables of the routers and radio access nodes in the above-manner without changing the destination address of the datagrams and engagement of a PDSN/FA, which may result in fast mobility management.

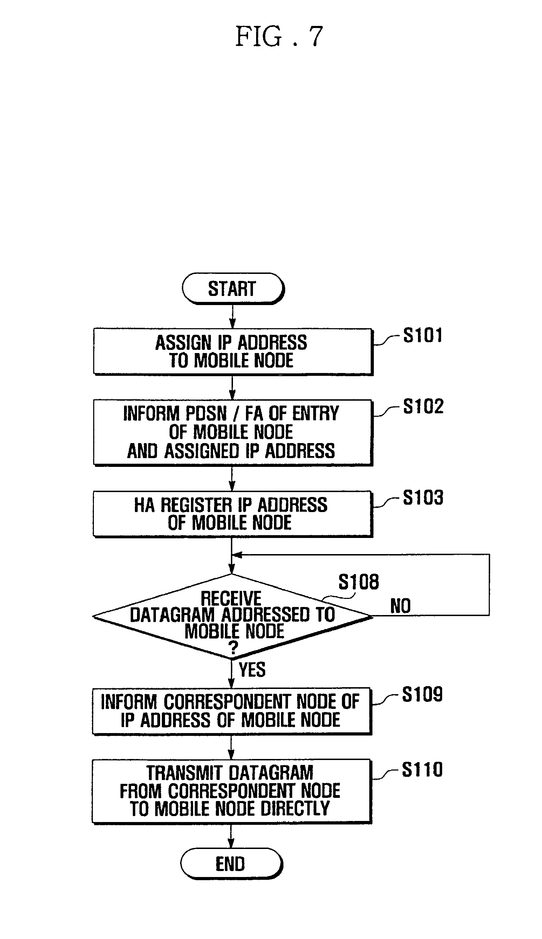

A mobility management method for the above-structured system is described hereinafter with reference to FIG. 7, FIG. 8, FIG. 9, and FIG. 10.

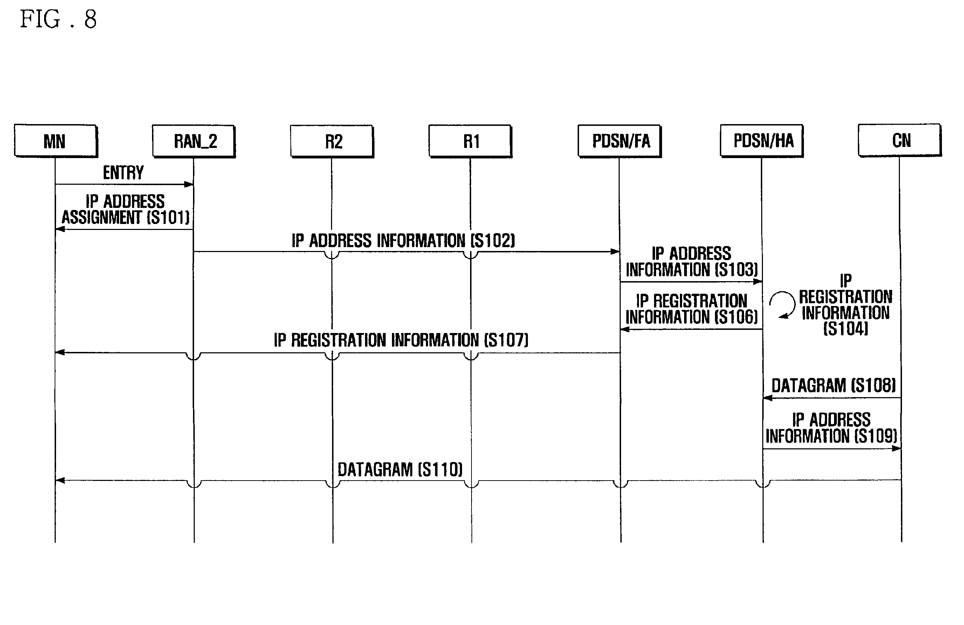

FIG. 7 is a flowchart showing a routing procedure of a mobility management method for a Mobile IP network according to an exemplary embodiment of the present invention, and FIG. 8 is a message flow diagram showing message flows in the routing procedure of FIG. 7.

In this exemplary embodiment, it is assumed that a local network 290 includes a first router 221 connected to a foreign agent (PDSN/FA) 220, second and third routers 222 and 223 connected to the first router 221, first and second radio access nodes 211 and 212 connected to the second router 222, and third and fourth radio access nodes 213 and 214 connected to the third router 223. The local network 290 is deployed on a subnet based IP address system identical to those of FIG. 3 and FIG. 5, i.e. the IP addresses of the network elements are hierarchically assigned by the first router 221.

Referring to FIG. 7 and FIG. 8, in order for the mobile node 100 to register its IP address, the mobile node 100 is assigned an IP address from a currently associated radio access node (in this exemplary embodiment, the second radio access node 212)(S101).

The second radio access node 212 is assigned a subnet IP address by the second router 222. The second router 222 is assigned a network IP address by the first router 221. The IP address of the mobile node 100 does not change while the mobile node 100 moves inside the local network 290.

After assigning the IP address to the mobile node 100, the second radio access node 212 informs the second router 222 connected to the second radio access node 212, the first router 221 connected to the second router 222, and the PDSN/FA 220 (S102) of the entry of the mobile node 100 into the local network and its assigned IP address. The PDSN/FA 220 operates as a gateway of the local network 290.

Upon receiving the information on the mobile node 100, the PDSN/FA 220 transfers the IP address of the mobile node 100 to the PDSN/HA 230, and the PDSN/HA 230 registers the IP address of the mobile node 100 (S103). The PDSN/HA 230 may recognize the location of the mobile node 100 on the basis of the registered IP address of the mobile node 100. Next, the PDSN/HA 230 completes registration of the IP address of the mobile node 100 (S104) and informs the PDSN/FA 220 of the registered IP address of the mobile node 100 (S 106). Consequently, the PDSN/FA 220 informs the mobile node 100 of the registration result.

After the IP address of the mobile node 100 is registered with the PDSN/HA 230, the PDSN/HA 230 determines whether a datagram addressed to the mobile node 100 has been received from a correspondent node 300 (S108).

In order for the correspondent node 300 to transmit the datagram to the mobile node 100, the correspondent node 300 requests the IP address of the mobile node 100 from the PDSN/HA 230.

If the IP address request for the mobile node 100 is received, the PDSN/HA 230 informs the correspondent node 300 of the IP address of the mobile node 100 in response to the IP address request (S 109).

After receiving the current IP address of the mobile node 100, the correspondent node 300 directly transmits the datagram to the mobile node 100 (S110). At this time, the correspondent node 300 may transmit the datagram to the PDSN/FA 220 to which the mobile node belongs without passing through the PDSN/HA 230.

Although the correspondent node 300 may transmit the datagram to the mobile node 100 through the PDSN/HA 230, it may be more effective to transmit the datagram to the mobile node 100 through the PDSN/FA 220.

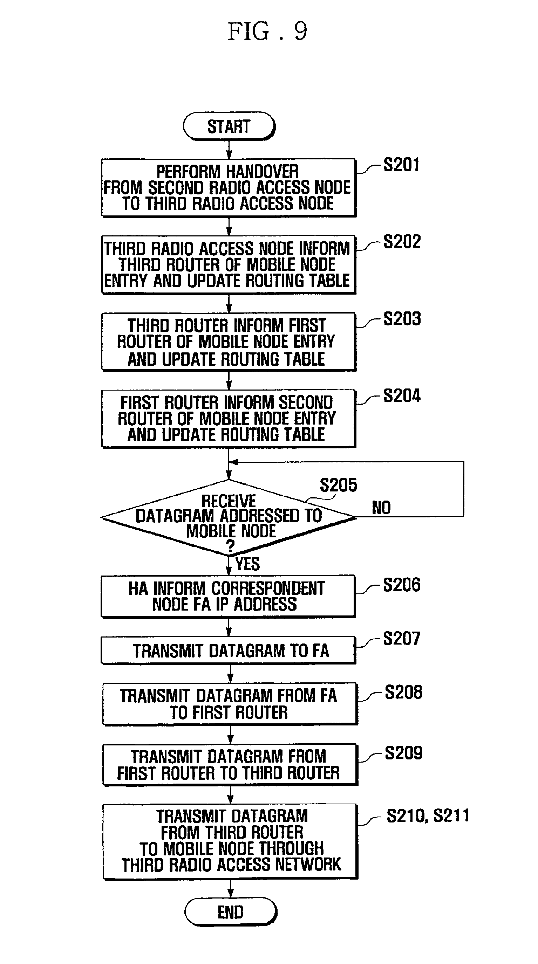

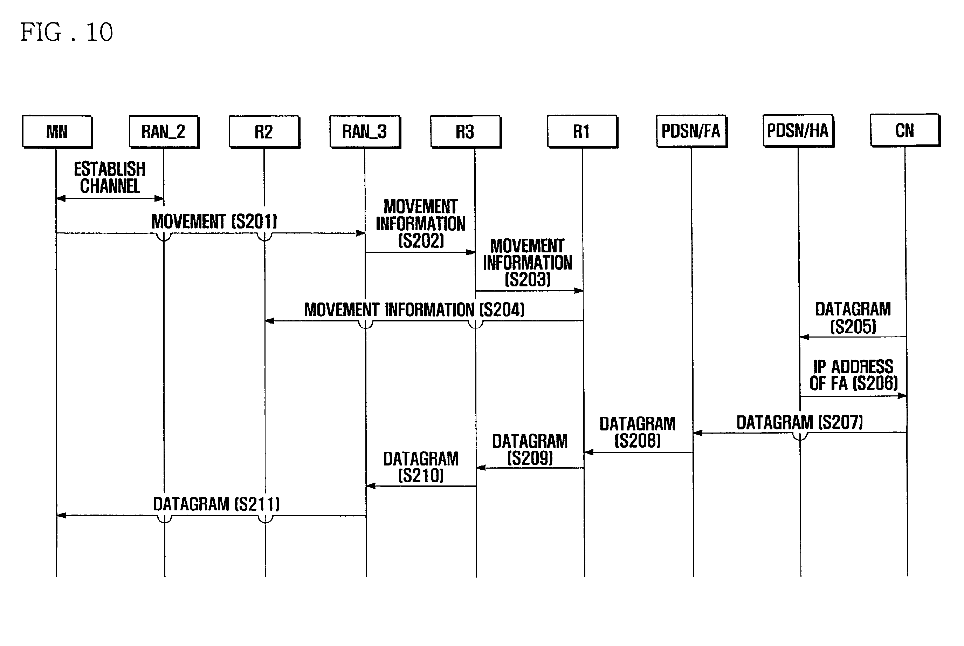

FIG. 9 is a flowchart showing a route reconfiguration procedure of a mobility management method for a Mobile IP network according to an exemplary embodiment of the present invention, and FIG. 10 is a message flow diagram showing message flows in the route reconfiguration procedure of FIG. 9.

The route reconfiguration procedure is described with the local network 290 assumed in the routing procedure of FIG. 7 and FIG. 8. In addition, it is assumed that the mobile node 100 arrives on a subnet represented by the third radio access node 213.

Referring to FIG. 9 and FIG. 10, if the mobile node 100 assigned its IP address from the serving radio access node, i.e. the second radio access node 212 moves into the subnet of the third radio access node 213 (S201), the third radio access node 213 informs the third router 223 of the entry of the mobile node 100 into the subnet and updates its routing table (S202). Sequentially, the third router 223 informs the first router 221 of the entry of the mobile node 100 into the subnet and updates its routing table (S203).

If the mobile node 100 performs a handover from the second radio access node 212 to the third radio access node 213 at step S201, the mobile node 100 establishes a channel with the third radio access node 213 and then releases the channel with the second radio access node 212. Through this handover procedure, the second and third radio access nodes 212 and 213 perform signal processing in accordance with the movement of the mobile node 100.

At steps S202 and S203, the third router 223 updates its routing table by adding the destination IP address of the datagram and designates the third radio access node 213 as its next hop for the destination IP address. Also, the first router 221 updates it routing table by adding the destination IP address of the datagram and designates the third router 223 as its next hop for the destination IP address.

After updating its routing table, the first router 221 transmits information regarding the movement of the mobile node 100 to the second router 222 and the second router 222 updates its routing table (S204).

The second router 222 updates its routing table by adding the destination IP address of the datagram and designates the first router 221 as its next hop for the destination IP address. The routing table update of the second router 222 may be omitted. However, updating the routing table may be advantageous because the update information is helpful when a datagram is abnormally routed according to a malfunction of the network or a change in the network environment. Since the mobile nodes move inside the local network, the IP address of the mobile node 100 does not change and IP registration to the PDSN/HA is not required.

After the routing tables are updated, the PDSN/HA 230 determines whether a datagram addressed to the mobile node 100 has been received from the correspondent node 300 (S205).

In order for the correspondent node 300 to transmit the datagram to the mobile node 100, the correspondent node 300 requests an IP address of the PDSN/FA 220 such that the PDSN/HA 230 informs the correspondent node 300 of the IP address of the PDSN/FA 220 that currently manages the mobile node 100 (S206).

After receiving the IP address of the PDSN/FA 220, the correspondent node 300 transmits the datagram to the PDSN/FA 220 that managed the mobile node 100 prior to its move to the third radio access node 213 without checking the IP address of the mobile node 100. However, the correspondent node 300 may request the IP address of the mobile node 100 from the PDSN/HA 230 periodically or when it is required to establish a new channel with the mobile node 100, because the mobile node 100 may move to another local network.

Next, the correspondent node 300 transmits the datagram to the PDSN/FA 220 (S207), and the PDSN/FA 220 transmits the datagram to the first router 221 (S208). Then, the first router 221 transmits the datagram to the third router 223 (S209). The third router 223 delivers the datagram to the mobile node 100 through the third radio access node 213 (S210).

Through steps S208, S209, and S210, the datagram is routed to the mobile node 100 on the basis of the updated routing tables of the network elements.

As described above, in the mobility management system and method of the present invention, the network elements constituting the local network 290 update their routing tables rather than reassigning an IP address to a mobile node 100 when the mobile node moves in a local network 290, which may secure the mobility of the mobile node 100.

In a case where the mobile node moves to another local network, the mobile node 100 may be assigned its IP address in accordance with the IP address assignment policy of the local network and registers the IP address assigned by the network with the PDSN/HA 230. Also, mobility management in the new local network may be performed in the above-described manner.

As described above, the mobility management system and method for a Mobile IP network manages the mobility of a mobile node in accordance with home based routing in a local network and subnet based routing between local networks, whereby it may be possible to enhance routing efficiency due to the advantages of the two routing schemes.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A mobility management method for a network comprising a router defining a local network comprising a subnet defined by a radio access node, comprising:
assigning an address to a mobile node in the subnet;
registering the address of the mobile node with a home agent connected to the router through a foreign agent as a gateway of the local network;
consulting routing tables of the radio access node and the router to deliver data to the mobile node; and
updating the routing tables without changing the address of the mobile node when the mobile node moves to another subnet in the local network.

2. The mobility management method of claim 1, wherein the address of the mobile node is within the subnet.

3. The mobility management method of claim 1, wherein each routing table comprises:
a next hop field to list directly connected network elements, and
a destination address field to list destination addresses matched to the network elements.

4. The mobility management method of claim 3, wherein updating the routing tables comprises:
adding the address of the mobile node to the destination address field of each routing table; and
adding a next hop for the address of the mobile node to the next hop field to designate the next hop for the address of the mobile node.

5. The mobility management method of claim 1, wherein registering the address of the mobile node comprises:
informing, by the radio access node, the router of the mobile node entry;
informing, by the router, the foreign agent of the mobile node entry;
informing, by the foreign agent, the home agent of the mobile node entry;
storing, by the home agent, the address of the mobile node; and
reporting, by the home agent, the storage of the address to the mobile node through the foreign agent.

6. The mobility management method of claim 1, further comprising:
routing a datagram to the mobile node after updating the routing tables,
wherein the datagram is transmitted to the mobile node through the foreign agent, the router, and the radio access node with which the mobile node is currently associated, with reference to the updated routing tables of the router and the radio access node.

7. The mobility management method of claim 1, wherein updating the routing tables is performed in the local network by registering the address of the mobile node and a next hop for the address.

8. A mobility management method for a network comprising a router defining a local network comprising a subnet defined by a radio access node, comprising:
registering a mobile node with a home agent when the mobile node enters the local network;
consulting routing tables of the router and the radio access node to route a datagram addressed to the mobile node;
detecting a movement of the mobile node;
determining whether the movement of the mobile node is an intra-local network movement or an inter-local network movement;
updating the routing tables without changing the address of the mobile node if the movement of the mobile node is an intra-local network movement; and
changing the address of the mobile node if the movement of the mobile node is an inter-local network movement.

9. The mobility management method of claim 8, further comprising registering the changed address of the mobile node to the home agent if the movement of the mobile node is the inter-local network movement.

10. The mobility management method of claim 8, wherein changing the address of the mobile node comprises assigning a new address within the new local network.

11. The mobility management method of claim 8, wherein each routing table comprises:
a next hop field to list directly connected network elements, and
a destination address field to list destination addresses matched to the network elements.

12. The mobility management method of claim 11, wherein updating the routing tables comprises:
adding the address of the mobile node to the destination address field of each routing table; and
adding a next hop for the address of the mobile node to the next hop field to designate the next hop for the address of the mobile node.

13. A mobility management system, comprising:
a home agent to manage a fixed address and care-of address of a mobile node;
a foreign agent connected to the home agent, the foreign agent being a gateway of a local network;
a router connected to the foreign agent in the local network; and
a radio access node connected to the router,
wherein the care-of address does not change when the mobile performs a handover between radio access nodes in the local network.

14. The mobility management system of claim 13, wherein the care-of address of the mobile node is an address within the local network.

15. The mobility management system of claim 13, wherein the mobile node performs handover without registration to the home agents.

16. The mobility management system of claim 13, wherein the mobile node is assigned a new care-of address from the local network when performing a handover to another local network.

17. The mobility management system of claim 13, wherein the local network takes back the address of the mobile node if the mobile node moves to another local network.

18. The mobility management system of claim 13, wherein the mobile node informs the home agent if the mobile node moves to another local network.

19. The mobility management system of claim 13, further comprising a routing table to define links between the mobile node, the router, and the radio access node.

20. The mobility management system of claim 19, wherein the routing table comprises:
a next hop field to list directly connected network elements, and
a destination address field to list destination addresses matched to the network elements.
